# EUROPÄISCHE PATENTANMELDUNG

(11) **EP 2 902 264 A1**
(43) Veröffentlichungstag der Anmeldung: **05.08.2015**
(21) Anmeldenummer: 15158241.8
(22) Anmeldetag: 01.08.2009
(51) Int. Cl.: B60R 7/04, B60H 1/00

(54) **Mittelkonsole für ein Kraftfahrzeug**

(30) Priorität: 08.08.2008 DE 102008037070
(62) Teilanmeldung aus: 09009964.9
(71) Anmelder: Bayerische Motoren Werke Aktiengesellschaft, 80809 München (DE)
(72) Erfinder: Schmid, Bernhard, 85774 Unterföhring (DE)

(57) **Zusammenfassung**

Die Erfindung betrifft eine Mittelkonsole für ein Kraftfahrzeug, mit einem Boden, einer vorderen Wand und einer hinteren Wand. Um die bekannte Mittelkonsole hinsichtlich Kosten- und Einbauaufwand zu verbessern, ist erfindungsgemäß vorgesehen, dass in der vorderen Wand (3) und in der hinteren Wand (4) jeweils im bodennahen Bereich ein Durchbruch (5) vorgesehen ist, weicher mit einer Luftführung verbindbar ist, und dass in die Mittelkonsole (1) ein Verschlußelement (9), welches die Durchbrüche (5) verschließt, einsetzbar ist.

## Beschreibung

Die vorliegende Erfindung betrifft eine Mittelkonsole für ein Kraftfahrzeug, mit einem Boden, einer vorderen Wand und einer hinteren Wand.

Mittelkonsolen sind heutzutage in Kraftfahrzeugen z. B. als Mittelarmlehne mit integriertem Ablagefach Gang und Gäbe. Wenn in einem solchen Fahrzeug beispielsweise als Sonderausstattung eine Fondbelüftung verbaut ist, wird die Luft durch einen Kanal in der Mittelkonsole von einem vorderen Luftkanal zu einem hinteren Fondgrill o. dgl. geführt. In diesem Fall muss also eine Luftführung in der Mittelkonsole vorgesehen sein. Wird dagegen beispielsweise in der Basisausstattung keine Fondbelüftung verbaut, wird auch keine Luftführung benötigt, so dass in diesem Fall eine Mittelkonsole ohne Luftführung benötigt wird. Je nach gewünschter Ausstattung müssen daher unterschiedliche Mittelkonsolen verbaut werden.

Dies erfordert einen erhöhten finanziellen Aufwand für die Herstellung und Lagerung der unterschiedlichen Ausführungen der Mittelkonsole sowie eine erhöhte Sorgfalt beim Einbau, da je nach Ausstattung auf die richtige Zuordnung der betreffenden Mittelkonsole geachtet werden muss.

Es ist daher Aufgabe der vorliegenden Erfindung, die bekannte Mittelkonsole hinsichtlich Kosten- und Einbauaufwand zu verbessern.

Erfindungsgemäß wird diese Aufgabe bei einer Mittelkonsole für ein Kraftfahrzeug, mit einem Boden, einer vorderen Wand und einer hinteren Wand, dadurch gelöst, dass in der vorderen Wand und in der hinteren Wand jeweils im bodennahen Bereich ein Durchbruch vorgesehen ist, welcher mit einer Luftführung verbindbar ist, und dass in die Mittelkonsole wahlweise ein Verschlusselement, welches die Durchbrüche verschließt, oder ein Freigabeelement, welches die Durchbrüche freigibt, einsetzbar ist.

Infolge dieser Ausgestaltung ist es möglich, ein und dieselbe Mittelkonsole sowohl in der Basisausstattung ohne Fondbelüftung als auch in der Sonderaustattung mit Fondbelüftung zu verbauen. Ob eine Luftführung durch die Mittelkonsole realisiert werden soll, hängt einzig und allein von dem eingesetzten Element ab. In der Basisausstattung wird das Verschlusselement verbaut, welches die Durchbrüche verschließt, und in der Sonderausstattung wird das Freigabeelement verbaut, welches die Durchbrüche freigibt. Dadurch kann sowohl der herstellerische als auch der konstruktive Aufwand beim Einbau minimiert werden. Selbst der Einbau eines falschen Elementes kann jederzeit ohne großen Aufwand rückgängig gemacht werden. Da das Element jederzeit auch wieder entfernt bzw. gegen ein anderes ausgetauscht werden kann, sind eine leichte Reinigung der Luftführung innerhalb der Mittelkonsole sowie eine Nachrüstung einer Fondbelüftung jederzeit möglich. Auch der Einbau eines flachen Lüftergebläses in die Luftführung innerhalb der Mittelkonsole ist nachträglich realisierbar.

Die Unteransprüche beinhalten vorteilhafte Weiterbildungen und Ausgestaltungen der erfindungsgemäßen Mittelkonsole.

Nach einer vorteilhaften Weiterbildung ist das Verschlusselement als freigeformte Auflagefläche für die Ablage von Gegenständen, vorzugsweise in Z-Richtung, oder als im Wesentlichen ebene Platte mit einer vorderen und einer hinteren Seitenwandung ausgebildet, wobei die Platte auf dem Boden der Mittelkonsole aufliegt und die vordere bzw. hintere Seitenwandung den Durchbruch in der vorderen bzw. hinteren Wand der Mittelkonsole abdeckt.

Alternativ kann das Verschlusselement als nach oben offener Kasten ausgebildet sein, dessen Boden auf dem Boden der Mittelkonsole aufliegt und dessen vordere bzw. hintere Seitenwandung den Durchbruch in der vorderen bzw. hinteren Wand der Mittelkonsole abdeckt.

Nach einer weiteren Alternative kann das Verschlusselement auch als Rahmen ausgebildet sein, der auf dem Boden der Mittelkonsole aufliegt und dessen vordere bzw. hintere Seitenwandung den Durchbruch in der vorderen bzw. hinteren Wand der Mittelkonsole abdeckt.

Das Verschlusselement nach allen drei Ausgestaltungsvarianten kann leicht hergestellt werden und ist ohne Schwierigkeiten zu verbauen.

Nach einer bevorzugten Ausgestaltung ist das Freigabeelement als freigeformte Auflagefläche oder als im Wesentlichen ebene Platte ausgebildet, die mindestens auf der Höhe der Oberkante der Durchbrüche liegt, so dass unterhalb des Freigabeelementes ein Luftführungskanal ausgebildet wird, der die Durchbrüche in der vorderen und der hinteren Wand der Mittelkonsole miteinander verbindet.

Bei der Ausgestaltung als freigeformte Auflagefläche beginnt diese an der Oberkante des vorderen Durchbruchs und endet an der Oberkante des hinteren Wanddurchbruchs. Die Form dazwischen ist frei zu gestalten.

Für eine exakte Positionierung kann sich das Freigabeelement vorteilhafterweise auf einer vorzugsweise umlaufenden Konsole abstützen, welche mindestens auf der Höhe der Oberkante der Durchbrüche in der Mittelkonsole angeordnet ist.

Alternativ oder zusätzlich können nach einer vorteilhaften Ausgestaltung auf der Unterseite des Freigabeelementes Abstützungen vorgesehen sein, welche sich auf dem Boden der Mittelskonsole abstützen.

Diese Abstützungen können vorteilhafterweise gleichzeitig als Luftleitrippen ausgebildet sein.

Besonders einfach lassen sich das Verschlusselement und das Freigabeelement im Einkomponenten-, Zweikomponentenverfahren oder als Monocompound herstellen.

Weitere Einzelheiten, Merkmale und Vorteile der Erfindung ergeben sich aus der nachfolgenden Beschreibung anhand der Zeichnungen. Es zeigen:
- Figur 1: eine erfindungsgemäße Mittelkonsole in der Draufsicht,
- Figur 2: eine mögliche Ausführungsform eines Verschlusselementes,
- Figur 3: die erfindungsgemäße Mittelkonsole mit eingesetztem Verschlusselement,
- Figur 4: eine mögliche Ausführungsform eines Freigabeelementes,
- Figur 5: die erfindungsgemäße Mittelkonsole mit eingesetztem Freigabeelement, und
- Figur 6: die erfindungsgemäße Mittelkonsole gemäß Figur 5 in einer Seitenansicht.

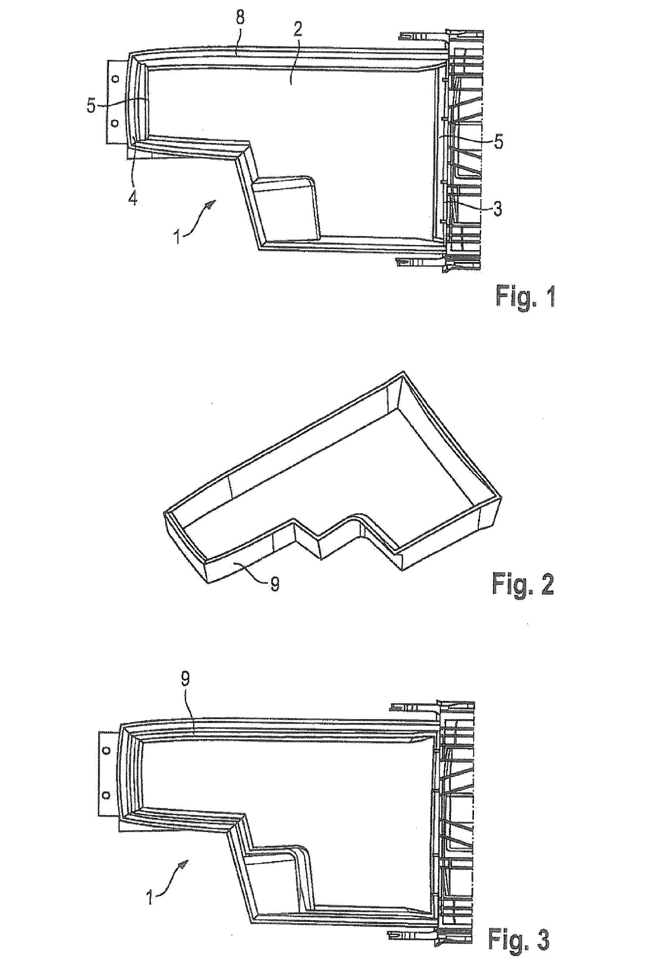

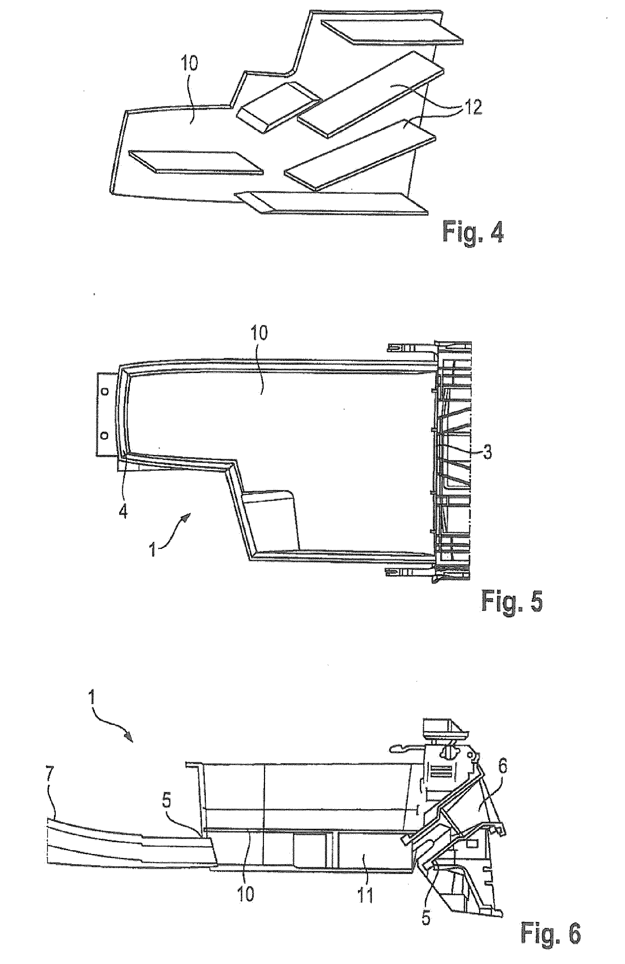

In Figur 1 ist eine erfindungsgemäße Mittelkonsole 1 für ein Kraftfahrzeug in der Draufsicht dargestellt, die beispielsweise als Mittelarmlehne mit Ablagefach ausgebildet ist. Die Mittelkonsole 1 weist einen Boden 2, eine vordere Wand 3 und eine hintere Wand 4 auf. In der vorderen Wand 3 und in der hinteren Wand 4 ist jeweils in deren bodennahem Bereich ein Durchbruch 5 vorgesehen, der für eine Fondbelüftung mit einem vorderen Luftkanal 6 und einem hinteren Fondgrill 7 verbunden werden kann (Figur 6).

In der Mittelkonsole 1 ist eine vorzugsweise umlaufende Konsole 8 vorgesehen, welche mindestens auf der Höhe der Oberkante der Durchbrüche 5 in der vorderen bzw. hinteren Wand 3, 4 der Mittelkonsole 1 angeordnet ist.

Je nachdem, ob das Kraftfahrzeug mit oder ohne Fondbelüftung ausgestattet sein soll, kann in die Mittelkonsole ein Verschlusselement 9 (Figur 2), das die Durchbrüche 5 verschließt, oder ein Freigabeelement 10 (Figur 4), das die Durchbrüche 5 freigibt, eingesetzt werden.

Eine mögliche Ausführungsform eines Verschlusselementes 9 ist in Figur 2 dargestellt. Gemäß dieser Ausführungsform wird das Verschlusselement 9 von einem Rahmen gebildet, dessen Höhe zumindest geringfügig höher ist als die Höhe der Durchbrüche 5 in der vorderen bzw. hinteren Wand 3, 4 der Mittelkonsole 1.

Alternativ kann das Verschlusselement 9 auch als im Wesentlichen ebene Platte mit einer vorderen und einer hinteren Seitenwandung ausgebildet sein, wobei die Platte auf dem Boden 2 der Mittelkonsole 1 aufliegt und die vordere bzw. hintere Seitenwandung den Durchbruch 5 in der vorderen bzw. hinteren Wand 3, 4 der Mittelkonsole 1 abdeckt.

Nach einer weiteren Alternative kann das Verschlusselement 9 auch als nach oben offener Kasten ausgebildet sein, dessen Boden auf dem Boden 2 der Mittelkonsole 1 aufliegt und dessen vordere bzw. hintere Seitenwandung den Durchbruch 5 in der vorderen bzw. hinteren Wand 3, 4 der Mittelkonsole 1 abdeckt.

Wenn das Verschlusselement 9 in die Mittelkonsole 1 eingesetzt ist, verschließt es die Durchbrüche 5 in der vorderen bzw. hinteren Wand 3, 4 der Mittelkonsole 1, wie in Figur 3 zu sehen ist.

Eine mögliche Ausführungsform eines Freigabeelementes 10 ist in Figur 4 dargestellt. Gemäß dieser Ausführungsform ist das Freigabeelement 10 von einer im Wesentlichen ebenen Platte gebildet, die mindestens auf der Höhe der Oberkante der Durchbrüche 5 liegt, so dass unterhalb des Freigabeelementes 10 ein Luftführungskanal 11 ausgebildet wird, der die Durchbrüche 5 in der vorderen und der hinteren Wand 3, 4 der Mittelkonsole 1 miteinander verbindet (Figur 6). Dabei kann sich das Freigabeelement 10 auf der in der Mittelkonsole 1 umlaufenden Konsole 8 abstützen.

Weiterhin sind auf der Unterseite des Freigabeelementes 10 Abstützungen 12 vorgesehen ist, welche sich auf dem Boden 2 der Mittelskonsole 1 abstützen. Diese Abstützungen 12 sind als Luftleitrippen ausgebildet, um den Luftstrom zu kanalisieren.

Je nach eingesetztem Element 9, 10 kann somit die erfindungsgemäße Mittelkonsole 1 durch eine einfache Maßnahme mit einem Luftführungskanal 11 versehen werden.

Das Verschlusselement 9 und das Freigabeelement 10 lassen sich in einfacher Weise im Einkomponenten-, Zweikomponentenverfahren oder als Monocompound herstellen.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Mittelkonsole
- 2: Boden
- 3: vordere Wand
- 4: hintere Wand
- 5: Durchbruch
- 6: vorderer Luftkanal
- 7: Fondgrill
- 8: Konsole
- 9: Verschlusselement
- 10: Freigabeelement
- 11: Luftführungskanal
- 12: Abstützungen

## Patentansprüche

1. Mittelkonsole für ein Kraftfahrzeug, mit einem Boden, einer vorderen Wand und einer hinteren Wand, **dadurch gekennzeichnet, dass** in der vorderen Wand (3) und in der hinteren Wand (4) jeweils im bodennahen Bereich ein Durchbruch (5) vorgesehen ist, welcher mit einer Luftführung verbindbar ist, und dass in die Mittelkonsole (1) ein Verschlußelement (9), welches die Durchbrüche (5) verschließt, einsetzbar ist.

2. Mittelkonsole nach Anspruch 1, **dadurch gekennzeichnet, dass** das Verschlusselement (9) als freigeformte Auflagefläche oder als im Wesentlichen ebene Platte mit einer vorderen und einer hinteren Seitenwandung ausgebildet ist, wobei die Platte auf dem Boden (2) der Mittelkonsole (1) aufliegt und die vordere bzw. hintere Seitenwandung den Durchbruch (5) in der vorderen bzw. hinteren Wand (3, 4) der Mittelkonsole (1) abdeckt.

3. Mittelkonsole nach Anspruch 1, **dadurch gekennzeichnet, dass** das Verschlusselement (9) als nach oben offener Kasten ausgebildet ist, dessen Boden auf dem Boden (2) der Mittelkonsole (1) aufliegt und dessen vordere bzw. hintere Seitenwandung den Durchbruch (5) in der vorderen bzw. hinteren Wand (3, 4) der Mittelkonsole (1) abdeckt.

4. Mittelkonsole nach Anspruch 1, **dadurch gekennzeichnet, dass** das Verschlusselement (9) als Rahmen ausgebildet ist, der auf dem Boden (2) der Mittelkonsole (1) aufliegt und dessen vordere bzw. hintere Seitenwandung den Durchbruch (5) in der vorderen bzw. hinteren Wand (3, 4) der Mittelkonsole (1) abdeckt.

5. Mittelkonsole nach einem der Ansprüche 1 bis 4, **dadurch gekennzeichnet, dass** das Verschlußelement (9) im Einkomponenten-, Zweikomponentenverfahren oder als Monocompound hergestellt ist.
